(19)

**Europäisches Patentamt**
**European Patent Office**
**Office européen des brevets**

(11) **EP 2 780 544 B1**

(12) **EUROPEAN PATENT SPECIFICATION**

(45) Date of publication and mention
of the grant of the patent:
**20.12.2017 Bulletin 2017/51**

(51) Int Cl.:
*E21B 44/00* (2006.01)    *G06F 3/0484* (2013.01)
*E21B 41/00* (2006.01)

(21) Application number: **12869095.5**

(86) International application number:
**PCT/US2012/026548**

(22) Date of filing: **24.02.2012**

(87) International publication number:
**WO 2013/126074 (29.08.2013 Gazette 2013/35)**

(54) **DETERMINING OPTIMAL PARAMETERS FOR A DOWNHOLE OPERATION**

ERMITTLUNG VON OPTIMALEN PARAMETERN FÜR EINE BOHRLOCHOPERATION

DÉTERMINATION DES PARAMÈTRES OPTIMAUX POUR UNE OPÉRATION DE FOND

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.09.2014 Bulletin 2014/39**

(73) Proprietor: **Landmark Graphics Corporation
Houston, TX 77042-3021 (US)**

(72) Inventors:
• **SAMUEL, Robello
Houston
Texas 77041 (US)**
• **GERMAIN, Olivier Roger
Houston
Texas 77056 (US)**
• **SINGH, Amit Kumar
Houston
Texas 77082 (US)**

• **MARLAND, Christopher Neil
Spring
Texas 77379 (US)**
• **ADARI, Ram Naresh
Katy
Texas 77450 (US)**

(74) Representative: **Jennings, Michael John
A.A. Thornton & Co.
10 Old Bailey
London EC4M 7NG (GB)**

(56) References cited:
**WO-A2-2007/018858    WO-A2-2008/070829
US-A1- 2002 165 671    US-A1- 2004 010 373
US-A1- 2009 119 082    US-A1- 2009 132 458
US-A1- 2010 051 286    US-A1- 2010 200 224
US-B1- 6 343 656**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL BACKGROUND

This disclosure relates to determining and/or optimizing parameters related to a drilling operation and/or other hydrocarbon recovery operation.

BACKGROUND

In many instances, drilling operations and other operations associated with recovery of hydrocarbons from a subterranean zone are performed by relying on measurement information sent from downhole tools and equipment during the operation without visually monitoring the operation. The measurement information may be of various data types measured by sensors and logged in certain industry database standards. Such information may be used to describe the operation and enable the creation and/or adjustment of control parameters for the operation. The control parameters may be generated under certain calculation models.

US 2009/119082 A1 discloses a reservoir fracture simulation that relates to a method of evaluating a reservoir. Data associated with properties of the reservoir as well as properties of a fracture in the reservoir, is collected. This data is then used in conjunction with a correlation matrix to determine modification parameters of a reservoir model of the reservoir. The correlation matrix corresponds to an empirical functional relationship between the modification parameters and the data, and is obtained based on a plurality of experimental fractures defined in the reservoir. Effects of the fracture are then emulated by selectively modifying the reservoir model using the modification parameters to generate a modified reservoir model. The reservoir is then modeled with the fracture by using the modified reservoir model to generate a result.

US 2010/051286 A1 discloses a system that includes a Christmas tree assembly mounted to a hydrocarbon well, an optical feedthrough module, and a plurality of optical sensors. The optical feedthrough module is operable to communicate through a pressure boundary of the Christmas tree assembly. The plurality of optical sensors is disposed within the Christmas tree assembly for measuring parameters associated with the Christmas tree assembly and is operable to communicate through the optical feedthrough module.

DESCRIPTION OF DRAWINGS

> FIG. 1 illustrates an example system for real-time analysis and/or optimization of a downhole operation according to the present disclosure;
> FIG. 2 illustrates an example process for real-time analysis and/or optimization of a downhole operation according to the present disclosure;
> FIG. 3 illustrates an example process for real-time analysis and/or optimization of example downhole parameters according to the present disclosure;
> FIGS. 4A-4B illustrate a graphical example of data coupling architecture for real-time analysis and/or optimization of a downhole parameter according to the present disclosure;
> FIG. 5 illustrates an example of calculation procedure in the optimization 1a procedure according to the present disclosure;
> FIG. 6 illustrates an example control loop for a downhole operation according to the present disclosure;
> FIG. 7 illustrates an example single-well and/or multi-well graphical processes for real-time analysis and/or optimization of a downhole operation according to the present disclosure;
> FIG. 8 is an example graphical user interface of a system for real-time analysis and/or optimization of a downhole operation according to the present disclosure; and
> FIG. 9 illustrates an example method for determining optimal parameters for a downhole operation.

DETAILED DESCRIPTION

This disclosure relates to determining optimal parameters for a downhole operation. In a general aspect, a computer-implemented method for managing a downhole operation is described in this disclosure. The method includes receiving a continuous stream of real-time data associated with an ongoing downhole operation at a data ware house. In the meantime, a selection of a downhole parameter is received from a user. Then, with a computing system, the selected downhole parameter is optimized based on a portion of the received stream of data to approach a target value of the selected downhole parameter. The optimized downhole parameter can then be used in the ongoing operation.

In one or more specific aspects combinable with the general aspect, the method can further include filtering the received stream of data associated with the ongoing downhole operation prior to optimizing the selected downhole parameter. The filtering process can include at least one of these example processes: filtering the received stream of data to a predetermined sampling rate, or removing noise associated with the received stream of data. The process of optimizing the selected downhole parameter can include at least one of the following example processes: maximizing the selected downhole parameter based on the portion of the received stream of data to approach the target value of the selected downhole parameter, or minimizing the selected downhole parameter based on the portion of the received stream of data to approach the target value of the selected downhole parameter.

More features can be included combinable with any of the previous aspects. For example, the ongoing downhole operation is a first downhole operation, the method can further include using the optimized downhole parameter in a second downhole operation different than the first downhole operation. The first downhole operation can occur in a first wellbore, and the second downhole operation can occur in a second wellbore different than the first wellbore. The first and second downhole operations can temporally overlap.

In one or more specific aspects combinable with any of the previous aspects, the method of optimizing the selected downhole parameter includes predicting the selected downhole parameter during the ongoing downhole operation. The use of optimized downhole parameter in the ongoing operation can include adjusting an input to a downhole tool performing the ongoing downhole operation, for example, operating the downhole tool at the adjusted input, optimizing the selected downhole parameter based on another portion of the received stream of data to approach the target value of the selected downhole parameter, and re-adjusting the input to the downhole tool performing the ongoing downhole operation.

In one or more specific aspects combinable with any of the previous aspects, the method further includes preprocessing the continuous stream of real-time data in the data warehouse for computation time reduction and preparation for following computation processes. The ongoing downhole operation includes at one of the following: a drilling operation; a trip in operation; a trip out operation; a wiping operation; a drilling and rotating off bottom operation; or a production operation. The substantially continuous stream of data associated with an ongoing downhole operation can include at least one of the following: weight on bit; downhole motor rotational speed; surface rotational speed; annular pressure; temperature; density; inclination; or azimuth.

In one or more specific aspects combinable with any of the previous aspects, the method can further include calculating one ore more variables associated with the ongoing downhole operation based at least in part on the substantially continuous stream of data associated with an ongoing downhole operation. The one or more variables associated with the ongoing downhole operation can include at least one of the following: hydromechanical specific energy; density, equivalent density, dogleg severity, or hole diameter. For example, when calculating the hydromechanicsl specific energy, the following equations may be used:

$$E_s = \frac{W_{eff}}{A_b} + \frac{120\pi NT}{R \times A_b} + \frac{Q\Delta P_b}{R \times A_b},$$

and

$$W_{eff} = W - \frac{Q}{58}\sqrt{\rho_m \Delta P_b}$$

where, $E_s$ is the specific energy, W is the weight on bit, $W_{eff}$ is the effective weight on bit, Q is the flow rate, $\Delta P_b$ is the pressure drop, R is the bore radius, $A_b$ is the bore cross section area, N is the speed of bit rotation, T is torque, and $\rho_m$ is drilling fluid density.

One or more embodiments of a control parameter optimization and automation system according to the present disclosure may include one or more of the following features. For example, various data types required for optimization calculation can be acquired simultaneously automatically. The data types can be streamed to the processors which use an optimization algorithm for calculating hydromechanical specific energy and determine the most energy efficient control parameters for the drilling operation. A scheduled loading and delivery system can be integrated to minimize unnecessary data queuing. A minimal pick-up and drop-off frequency for the data can be used to increase system efficiency.

The optimization calculation can be based on energy calculations that are updated within a proprietary program in real time (*e.g.,* near instantly or at least quicker than human reaction) to observe the efficiency of drilling using certain data streams. Continuous surveillance may be performed on the drilling efficiency, bit performance, bit flounder point, comparison against the formation strength, and other parameters.

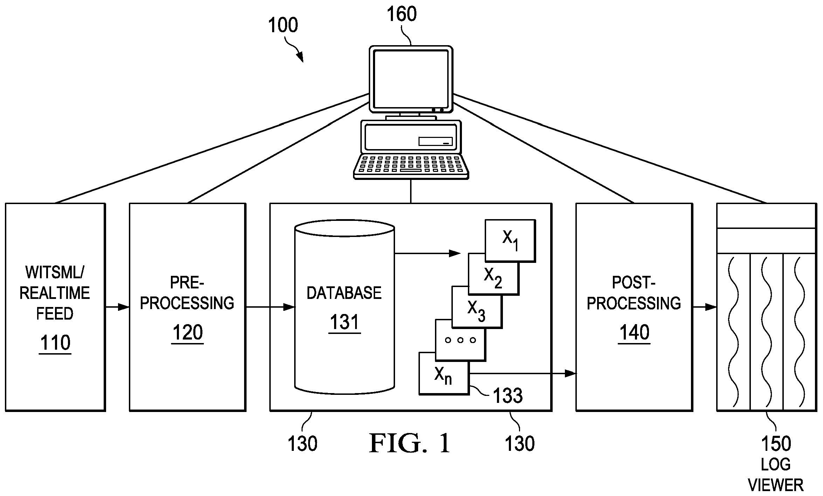

FIG. 1 illustrates an example system 100 for real-time analysis and/or optimization of a downhole operation according to the present disclosure. The example system 100 may be an optimization control system managing a downhole operation. The system 100 includes a central computation device 160 for processing and computation. The central computation device 160 may include a central processing unit, memories, a data storage unit, an input/output interface, a network interface, a graphical user interface (GUI), and other peripheral devices. The computation device 160 operates an optimization control module that includes a data feed 110, a pre-processing module 120, a data assembly and classification module 130, a post-processing module 140, and a monitor output 150.

In some embodiments, the computation device 160 may be any server that stores one or more hosted applications, data in data repositories, web-based applications, and/or other content. At a high level, the computation device 160 comprises computer or other an electronic computing device (*e.g.,* smartphone, tablet, PDA, or otherwise) operable to receive, transmit, process, store, or manage data and information. As used in the present disclosure, the term "computer" is intended to encompass any suitable processing device. Indeed, the computation device 160 may be any computer or processing device such as, for example, a blade server, general-purpose personal computer (PC), Macintosh, workstation, UNIX-based workstation, or any other suitable device. In other words, the present disclosure contemplates computers other than general purpose computers, as well as computers without conventional operating systems. Further, illustrated computation device 160 may be adapted to execute any operating system, including Linux, UNIX, Windows, Mac OS, or any other suitable operating system.

A central processing unit (CPU) of the computation device 160 may include one or more processors, a blade, an application specific integrated circuit (ASIC), a field-programmable gate array (FPGA), or another suitable component. Generally, the CPU executes software (*e.g.,* instructions encoded on tangible, non-transitory media) and manipulates data to perform the operations of the computation device 160. Regardless of the particular implementation, "software" may include computer-readable instructions, firmware, wired or programmed hardware, or any combination thereof on a tangible medium operable when executed to perform at least the processes and operations described herein. Indeed, each software component may be fully or partially written or described in any appropriate computer language including C, C++, Java, Visual Basic, assembler, Perl, any suitable version of 4GL, as well as others.

One or more memories of the computation device 160 may include any memory or database module and may take the form of volatile or non-volatile memory including, without limitation, magnetic media, optical media, random access memory (RAM), read-only memory (ROM), removable media, or any other suitable local or remote memory component. The memories may store various objects or data, including classes, frameworks, applications, backup data, business objects, jobs, web pages, web page templates, database tables, repositories storing business and/or dynamic information, and any other appropriate information including any parameters, variables, algorithms, instructions, rules, constraints, or references thereto associated with the purposes of the computation device 160.

An interface of the computation device 160 may comprise logic encoded in software and/or hardware in a suitable combination and operable to communicate with a network. More specifically, the interface may comprise software supporting one or more communication protocols associated with communications such that the network or interface's hardware is operable to communicate physical signals within and outside of the illustrated computation device 160. A network facilitates wireless or wireline communications between the components of a computing environment including the computation device 160, as well as with any other local or remote computer, such as additional clients, servers, or other devices communicably coupled to the network but not illustrated in FIG. 1.

A network communicably coupled to the computation device may be a single network, but may be a continuous or discontinuous network without departing from the scope of this disclosure. The network may be all or a portion of an enterprise or secured network, while in another instance at least a portion of the network may represent a connection to the Internet. In some instances, a portion of the network may be a virtual private network (VPN), such as, for example, the connection between the computation device and other computers or other electronic devices. Further, all or a portion of the network can comprise either a wireline or wireless link. Example wireless links may include 802.11a/b/g/n, 802.20, WiMax, and/or any other appropriate wireless link. In other words, the network encompasses any internal or external network, networks, subnetwork, or combination thereof operable to facilitate communications between various computing components including computation device 160. The network may communicate, for example, Internet Protocol (IP) packets, Frame Relay frames, Asynchronous Transfer Mode (ATM) cells, voice, video, data, and other suitable information between network addresses. The network may also include one or more local area networks (LANs), radio access networks (RANs), metropolitan area networks (MANs), wide area networks (WANs), all or a portion of the Internet, and/or any other communication system or systems at one or more locations.

A GUI of the computation device 160 may generate a visual representation of the one or more hosted applications, web-based applications, data set, or other data to provide efficient and user-friendly presentation of data provided by or communicated within the system. The term "graphical user interface," or GUI, may be used in the singular or the plural to describe one or more graphical user interfaces and each of the displays of a particular graphical user interface. Therefore, the GUI can represent any graphical user interface, including but not limited to, a web browser, touch screen, or command line interface (CLI) that processes information in the computation device 160 and efficiently presents the information results to the user. In general, the GUI may include a plurality of user interface (UI) elements, such as interactive fields, pull-down lists, and buttons operable by the user at the computation device 160.

The data feed 110 may include technical data transmitted under an industrial format such as the wellsite information transfer standard markup language (WITSML). WITSML has been developed for communicating data to oil rig operation from a diverse array of specialist contractors at a modern drilling rig or offshore platform. WITSML continues to be developed by an Energistics facilitated Special Interest Group to develop XML standards for drilling, completions, and interventions data exchange. WITSML facilitates the free flow of technical data across networks between oil companies, service companies, drilling contractors, application vendors and regulatory agencies for the drilling, completions, and interventions functions of the upstream oil and natural gas industry. The data feed 100 may include data under other standards and formats, such as the wellsite information transfer specification.

The data feed 110 may be real time, "right time," and/or buffered/stored data. In some embodiments, "right time" data may include, for instance, pre-determined data for predetermined conditions, such as a data template under certain conditions. In some implementations, the data feed 100 may include data from an active data warehousing, which captures transactions when data change in real time, and integrate the data into the warehouse along with maintaining batch or scheduled cycle refreshes. In some implementations, the data feed 100 may include data from a right-time data warehouse, which contains pre-determined data for certain pre-defined conditions. In some implementations, the data feed 100 may include data from a pre-stored memory or buffer module for validating, testing or tuning the computation device 160 and/or the computation algorithm running therein.

The data feed 100 may include data types such as depth (measured and vertical), flow rate, weight on bit, bit rotational speed,, bit size, drill collar length, rate of penetration, torque and drag on the string, chloride filtrate, plastic viscosity, yield point, mud weight and gel strength (*e.g.,* 10 sec and 10 minute). Other data types may also be included for optimization calculation, such as calcium filtrate, chloride filtrate, torque, circulating pressure, weight on bit, drag, bit size, bottom-hole assembly, rate of penetration and revolutions per minute.

The pre-processing module 120 may include a processing module that filters and/or conditions the data feed 100. The preprocessing module 120 may filter the data into a predetermined sampling rate. The pre-processing module 120 may include one or many digital filters and/or one or many analog filters. The pre-processing module 120 may include signal converters such as digital to analog signal converter or analog to digital signal converter to unify the signal data to be processed. The filters may be a band-pass filter, a high pass filter, a low pass filter, an average filter, a noise reduction filter, a delay filter, a summation filter, a format conversion filter, and/or other types of filters. The filters may be based on fast Fourier transform to allow the spectrum to be manipulated before converting the modified spectrum back to a time-series signal, such as band-pass filters. The filters may be based on a state-space model such as the Kalman filter.

After the data stream has been pre-processed at the pre-processing module 120, the data is to be assembled and classified at module 130. The data assembly and classification module 130 may include a database 131 and a classification 133. The assembly and classification process, in some embodiments, may be used in optimization and prediction. In the case of normal operation datasets, the data are classified as drilling, tripping out, tripping in, wiping, drilling and rotating off bottom. Embodiments of the present disclosure may be applicable to other non-productive operations which can be further classified. Several analysis such as rate of penetration prediction, specific energy estimation, drilling efficiency using the compressive rock strength using the UCS/CCS value or LWD log data, well profile energy, stuck pipe prediction, vibration prediction, increase buildup of cuttings bed, deviation in the friction factor, etc. may be performed for the classification.

The data and parameters used in the system 100 may be stored in the database 131. The stored data and parameters can be of any type, format, or structure depending on the requirement by the system 100. In some implementations, such as pipe sticking condition, the data and parameters can belong to three major groups of classification: mechanical, differential, and non-stuck. The groups may be the classification 133 in the assembly and classification module 130. The variables of the dataset that can be common to both stuck and non-stuck wells and listed in the classification 133 are measured depth, actual vertical depth, flow rate, weight on bit, bit rotational speed,, bit size, drill collar length, rate of penetration, torque and drag on the string, chloride filtrate, plastic viscosity, yield point, mud weight and gel strength (*e.g.,* 10 sec and 10 minute). The variables may be stored in a form of variables $x_1$ to $x_n$ in the classification 133. However, other data and parameters may be stored in the database 131 as specified by the system 100.

The post-processing module 140, in some embodiments, may be the computation center where the optimization and sensitivity analysis are executed. The optimization may compare specific energy calculations to that of rock strength. Either unconfined rock strength (UCS) or confined rock strength (CCS) enables continuous evaluation of drilling performance to identify limiters, such as flounder points, in the drilling system. The specific energy calculated can be used to determine the failure point of the rock formation calculated from the function of rock strength. The rock strength can be predicted from offset well analysis and projected onto future well profiles. Rock strength can then be recalculated in real time based on measurements of the rock properties from LWD/MWD tools. In some implementations, rock strength can be calculated using post well wireline or post well LWD/MWD logging tools.

Optimization performed in the post-processing module 140 can be applied to the bit by determining the energy required to breakdown the formation and ensure bit life is used effectively. Drilling parameters can then be recommended by the system 100 for optimized drilling efficiency and bit life. Bit wear and bit life can be recalculated as downhole formation evaluation tools update and correct for any formation variations that result in varying formation compressive strengths. The drilling process can then be predicted and the rate of penetration (ROP) can be calculated under the optimized drilling parameters.

As ROP is predicted for optimized drilling parameters, then the impact in the form of non-productive time or invisible lost time may also be calculated. The system may be able to quantify the negative impact of sub-optimal drilling. In some implementations, the optimization performed in the post-processing module 140 may be applied to directly measured data for optimizing a real time situation. The optimization may also performed under arbitrary situation for simulation purposes. The optimization may also be used to compare optimized parameters with current parameters to generate a prediction and/or evaluation report.

The post-processing module 140 may include sensitivity analysis for the optimization calculation. Sensitivity analysis may determine how the parameters/variables in the output of the optimization model can be attributed to different variations in the inputs of the model. The sensitivity analysis may enable a priority ranking for the drilling control parameters so that the most change effective parameters can be selected and optimized.

The monitor output 150 may display, print, and/or transmit the optimization analysis result to a user and/or receiving end that has the authority to change control parameters. The monitor output 150 may include a graphical user interface (GUI) that shows the data feed 110, current control parameters, optimized control parameters, drilling performance, and/or other data related to the drilling operation. The GUI may be displayed on a stationary monitoring device, a mobile electronic device, or both. The monitor output 150 may be connected to a drilling operation control module in which updated drilling parameter generated from optimization may be used for updated drilling control.

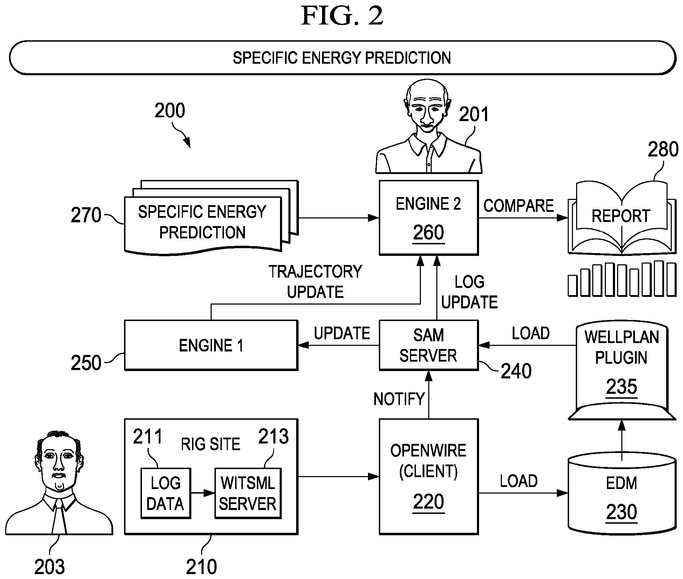

FIG. 2 illustrates an example process 200 for real-time analysis and/or optimization of a downhole operation according to the present disclosure. The process 200 illustrates an example of using streamed data for specific energy prediction. In comparison to FIG. 1, a rig site input module 210 functions similarly to the data feed 110 in FIG. 1. The rig site input module 210 may include a log data module 211 and a WITSML server 213 or a connection to the WITSML server 213. The rig site input module 210 may be operated by an input data manager 203, who may initiate, monitor, and manage the rig site input module 210.

In the implementation shown in FIG. 2, the rig site input module 210 transmits data to a client module 220, such as the OpenWire. The OpenWire can be an application that converts stream of drilling data from known resources in common languages such as WITSML, WITS, OPC, etc. The OpenWire application can insert the data into known databases or datastores such as OpenWorks, EDM, Finder, etc. Other applications may also be implemented at the client module 220 to build complex data streaming applications.

The client module 220 may further load the data stream to an estimation module 230. The estimation module 230, in some embodiments, may be Engineers Data Model (EDM), WELLPLAN, Compass, StressCheck, Wellcat, and/or other commercially available or proprietary software for predictive estimation. In some implementations, EDM is used at the estimation module 230. The estimation module 230 may provide drilling, well planning and operations reporting systems in the form of a single platform for detailed operations and engineering workflows from prototype to plan and actual phases of drilling or servicing a well. The estimation module 230 then process the data stream and send the data stream to a well-plan plug-in module 235.

The client module 220 may notify an security account manager (SAM) server 240 while the well-plan plug-in module 235 transmits data stream to the SAM server 240. The SAM server 240 may be a database present on servers running an operating system, such as a Windows Server that stores user accounts and security descriptors for users on the local computer. The SAM server 240 may then update two engines, engine-1 250 and engine-2 260, via a data update 241 and a log update 243. The engine-1 250, in some embodiments, may be compared to the pre-processing module 120 shown in FIG. 1; and the engine-2 260, in some embodiments, may be compared to the post-processing module 140 shown in FIG. 1.

The SAM server 240 may update the engine-1 250 and the engine-2 260 simultaneously; or the SAM server 240 may update the engine-1 250 first and then update the engine-2 260. The output of engine-1 250 may further transmit trajectory update 245 to the engine-2 260. The engine-1 250 may include one or many digital filters and/or one or many analog filters. The pre-processing module 120 may include signal converters such as digital to analog signal converter or analog to digital signal converter to unify the signal data to be processed. The filters may be a band-pass filter, a high pass filter, a low pass filter, an average filter, a noise reduction filter, a delay filter, a summation filter, a format conversion filter, and/or other types of filters.

One of the primary objectives performed by engine-1 250 may be to reduce signal noise. Another primary objective performed by the engine-1 250 may be to filter the data to a desired end sampling rate. The engine-1 250 may perform data assembly and classification. In the case of normal operation, the data may be classified as datasets of categories such as, for example, drilling, tripping out, tripping in, wiping, and drilling and rotating off bottom. Embodiments of the present disclosure may be applicable to other non-productive operations which can be further classified. The conditioned and classified data is then sent to engine-2 260 via the trajectory update 245.

The engine-2 260 performs optimization and sensitivity analysis after receiving data updates from the SAM server 240 and the engine-1 250. The log update 243 and the trajectory update 245 may include information related to the position of the wellpath and associated drilling parameters so that drilling data can be referenced to depth as well as time. The engine-2 260 may compare specific energy calculations to that of rock strength. Either UCS or CCS enables continuous evaluation of drilling performance to identify limiters, such as flounder points, in the drilling system. The specific energy calculated can be used to determine the failure point of the rock formation calculated from the function of rock strength. The rock strength can be predicted from offset well analysis and projected onto future well profiles.

The engine-2 260 may receive a previously iterated specific energy prediction 270. The specific energy prediction 270 may be calculated from data stream measured in a previous period. The engine-2 260 may be controlled, monitored, and/or managed by an operator 201. The operator 201 may be monitoring the operation only, or provide further instructions and/or parameter definitions to the engine-2 260. The engine-2 260 performs the optimization with the updated data stream (log update 243 and trajectory update 245) as well as the specific energy prediction 270. The optimization may be based on maximization or minimization of a target value such as the hydromechanical specific energy, which may be calculated with the following derivations.

The mathematical formulation for complex well path designs may utilize data to enable decision making on controlling vibrations along with drill string and predicting when to pull out worn bits, preventing bottom hole balling and bit balling. The objective function may be a modified derivation of mechanical specific energy calculated as:

$$E_s = \frac{W_{eff}}{A_b} + \frac{120\pi NT}{R \times A_b} + \frac{Q\Delta P_b}{R \times A_b},$$

and

$$W_{eff} = W - \frac{Q}{58}\sqrt{\rho_m \Delta P_b}$$

where, $E_s$ is the specific energy, W is the weight on bit (kips), $W_{eff}$ is the effective weight on bit (kpis), Q is the flow rate (gpm), $\Delta P_b$ is the pressure drop (psi), R is the bore radius (in), $A_b$ is the bore cross section area (in$^2$), N is the speed of bit rotation (rpm), T is torque (ft-lbf), and $\rho_m$ is drilling fluid density.

Multiple cutting structures (*e.g.,* when using bits and under-reamers or hole openers) can significantly affect the tandem cutting structure performance and therefore the specific energy calculations. Due to different levels of aggressiveness, the side cutting force may result in different specific energy levels. The different levels of aggressiveness may drill different formations resulting in different specific energy. Balancing the energy is extremely important when different cutting structures are used in tandem. Considering the new equilibrium condition when such types of components are present in the drill string, the hydromechanical specific energy can be given as:

$$E_s = \frac{W_{eff}^b}{A_b} + \frac{W_{eff}^r}{A_r} + \frac{40\pi\mu N}{R}\left(\frac{\left(4F_s^b + W_{eff}^b\right)}{A_b} + \frac{\left(4F_s^r + W_{eff}^r\right)}{A_r}\right)$$

in which

$$W_{eff} = W - \frac{Q_r}{58}\sqrt{\rho_m \Delta P_r}$$

where $F_s$ is force in the string, r is reamer, $A_r$ is the reamer area $A_r = \dfrac{\pi}{4}\left(d_r^2 - d_b^2\right)$, where $d_r$ is the diameter of the reamer or hole opener and $d_b$ is the diameter of the pilot bit, and $\Delta P_r$ is reamer pressure drop.

When hole openers or under-reamers are used in the drill string while drilling the drilling fluid may become split resulting in parallel flow paths in the system. Due to the split in flow and accounting the effect of impact force due to the flow the calculation for hydromechanical specific energy can be further modified as:

$$E_s = \frac{W_{eff}^b}{A_b} + \frac{W_{eff}^r}{A_r} + \frac{40\pi\mu N}{R}\left(\frac{\left(4F_s^b + W_{eff}^b\right)}{A_b} + \frac{\left(4F_s^r + W_{eff}^r\right)}{A_r}\right) + \left(\frac{Q_b\Delta P_b}{A_b} + \frac{Q_r\Delta P_r}{A_r}\right)$$

The potential rate of penetration may also be predicted for all bit types: fixed, roller cone, and others, by applying specific energy theory and mechanical efficiency as a function of rock strength. After the apparent rock strength is accurately determined from either open-hole log analysis or core measurements, the ROP based on work and power input into the bit efficiency can be calculated. The following calculations establish the advantage of the model disclosed.

Optimization is carried out with boundary conditions (constraints) updating as the drilling process proceeds. The time or depth interval can be either set by the user or automated by monitoring the new variable change within the desired set limits. The number of variables can be depending on the real-time data feed. The disclosure also embodies the comparison of the theoretical energy optimal well design with the actual well trajectory. It can be further normalized to a standard wellbore course length between survey stations and can be given as

$$E_{(abs)_n} = \left(\frac{\sum\limits_{i=1}^{n}\left(\kappa_i^2 + \tau_i^2\right)\Delta D_i}{D_n + \Delta D_n}\right)$$

where $E_{(abs)n}$ is the absolute wellprofile energy, $\kappa_i$ is wellbore curvature, $\tau_i$ is borehole torsion, $\Delta D_i$ is a change in depth at survey point $i$, $D_n$ is a depth at any survey point $i$, and $\Delta D_n$ is the change in depth across a number of survey stations, n.

In order to quantify how the well trajectory has changed after applying the artificial tortuosity, a relative energy is defined which is the energy of the wellbore relative to the absolute energy, and is as given below:

$$E_{s\,(rel)_n} = E_{s(abs)_n}^{tor} - E_{s(abs)_n}^{notor}$$

where $E_{s(rel)_n}$ is relative wellprofile energy, $E_{s(abs)_n}^{tor}$ is absolute wellprofile energy with tortuosity or well undulation applied, and $E_{s(abs)_n}^{notor}$ is absolute wellprofile energy without tortuosity or no well undulation applied.

Minimization of the total energy of the curve will result in less torque and drag during drilling operations. Various optimization schemes may be employed. In some implementations, derivatives for curvature squared, square of curvature derivative, torsion squared, or combinations of such terms with mean weighting are given below

$$\left(\frac{d\left(\kappa^2 + \tau^2\right)}{dD}\right)_i = \frac{\left[\left(\frac{\Delta\left(\kappa_{i-1}^2 + \tau_{i-1}^2\right)}{\Delta D_{i-1}^2}\right)\Delta D_{i+1} + \left(\frac{\Delta\left(\kappa_{i+1}^2 + \tau_{i+1}^2\right)}{\Delta D_{i+1}^2}\right)\Delta D_{i-1}\right]}{\left(\Delta D_{i-1} + \Delta D_{i+1}\right)}$$

where $\dfrac{\Delta \kappa_{i-1}}{\Delta D_{i-1}} \quad \dfrac{\Delta \kappa_{i-1}}{\Delta D_{i-1}}$ and $\dfrac{\Delta \kappa_{i+1}}{\Delta D_{i+1}} \quad \dfrac{\Delta \kappa_{i+1}}{\Delta D_{i+1}}$ are respectively the right and left derivative slopes of the curvature.

The derivative analysis may be useful to determine the depth of the occurrence of the unevenness in the well path that may cause tool failure. The usefulness of the model may depend on validation and comparison with the actual data. Also, it should provide confidence with fewer uncertainties.

Based on the formulations, the engine-2 260 performs optimization and generate a result report 280 comparing with the previous specific energy prediction. The report 280 may include numerical data in the format of numbers, graphical figures, and other forms for the operator 201 to monitor the calculated result.

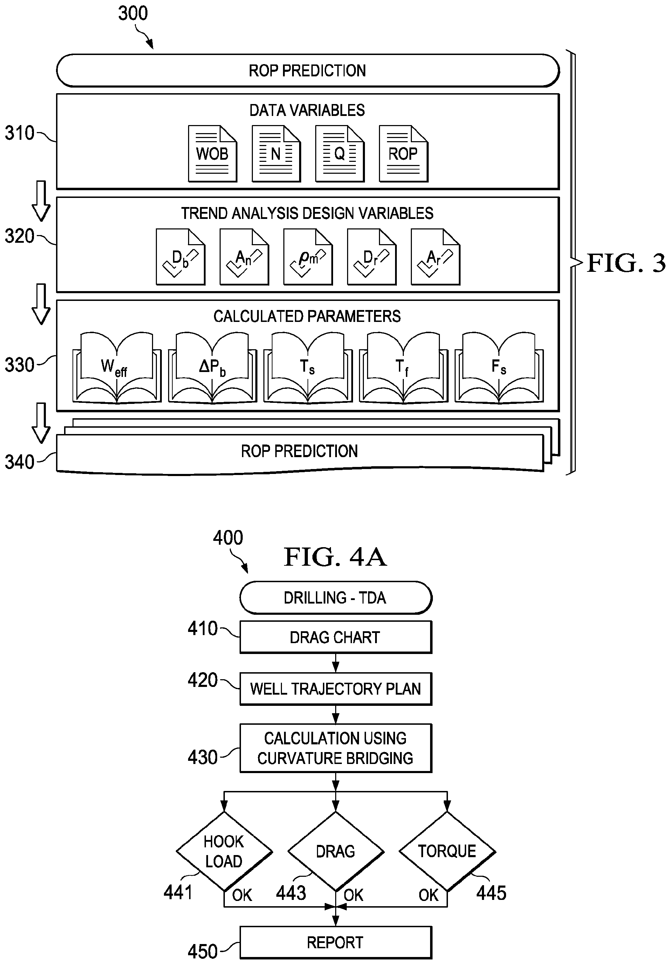

FIG. 3 illustrates an example process 300 for real-time analysis and/or optimization of example downhole parameters according to the present disclosure. In the implementation shown in FIG. 3, the process 300 may be used to predict the rate of penetration. The process 300 may first receive input data variables 310, which may include current information regarding weight on bit (WOB), drill bit rotational speed (N), drilling fluid flow rate (Q), and current rate of penetration (ROP). Other variables may also be included depending on the complexity of the situation and which corresponding formulation is applied.

The process 300 may subsequently receive trend analysis design variables 320 that are suggested, defined or calculated by a user or operator alike. The trend analysis design variables 320 may include bore diameter ($D_b$), bore cross sectional area ($A_n$), drilling fluid density/mud density ($\rho_m$), reamer/hole-opener diameter ($D_r$), reamer/hole-opener cross sectional area ($A_r$), and other design variables.

After receiving the data variables 310 and the trend analysis design variables 320, the process 300 can then calculate control parameters 330 based on the formulations used in the engine-2 260 shown in FIG. 2. In some implementations, the process 300 may generate parameters 330 such as the $W_{eff}$, $\Delta P_b$, $T_s$, $T_f$, and $F_s$. The calculated parameters 330 may then be used to calculate the ROP at the step of ROP prediction 340.

In some implementations, the process 300 may be used to predict specific energy. The process 300 may first receive input data variables 310, which may include current information regarding weight on bit (WOB), drill bit rotational speed (N), drilling fluid flow rate (Q), and current rate of penetration (ROP). Other variables may also be included depending on the complexity of the situation and which corresponding formulation is applied.

The process 300 may subsequently receive trend analysis design variables 320 that are suggested, defined or calculated by a user or operator alike. The trend analysis design variables 320 may include bore diameter ($D_b$), bore cross sectional area ($A_n$), drilling fluid density/mud density ($\rho_m$), reamer/hole-opener diameter ($D_r$), reamer/hole-opener cross sectional area ($A_r$), and other design variables.

After receiving the data variables 310 and the trend analysis design variables 320, the process 300 can then calculate control parameters 330 based on the formulations used in the engine-2 260 shown in FIG. 2. In some implementations, the process 300 may generate parameters 330 such as the $W_{eff}$, $\Delta P_b$, $T_s$, $T_f$, and $F_s$. The calculated parameters 330 may then be used to calculate the specific energy instead of ROP prediction at the step 340.

FIGS. 4A-4B illustrate a graphical example of data coupling architecture 400 for real-time analysis and/or optimization of a downhole parameter according to the present disclosure. The data coupling architecture 400 shown in FIG. 4A is used in a drilling time domain analysis (TDA). The TDA may be very effective in evaluating gas and light-oil reservoirs. The analysis process may include creating a drag chart 410, a well trajectory plan 420, calculating using curvature bridging 430, and generating a report 450. The calculation using curvature bridging 430 may include calculation of the Hook load 441, the drag 443 and the torque 445 of the drilling operation.

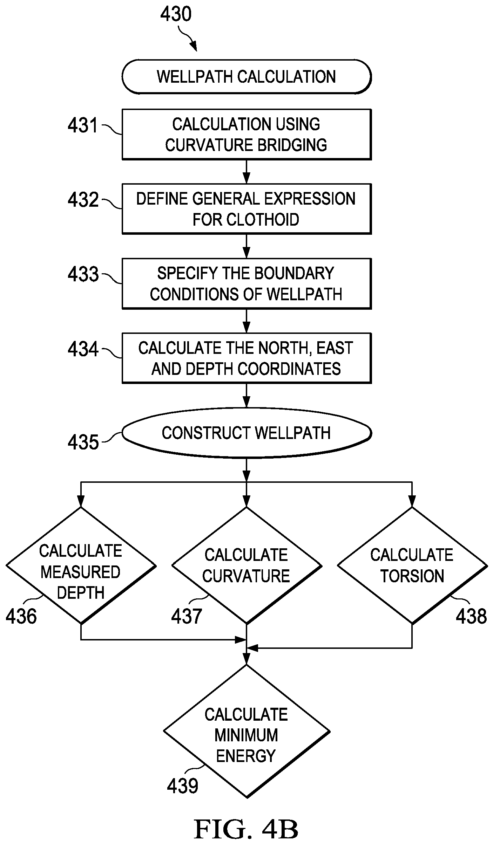

In FIG. 4B, detail of the well path calculation performed using curvature bridging calculation 430 is illustrated. The well path calculation initiates with calculation using curvature bridging 431. The general expression for clothoid (*e.g.,* a type of curve that has the unique property of making the wellbore smooth) or Eula spiral/spiros is first defined at step 432. Subsequently at step 433, the boundary conditions of wellpath are specified. At step 434, the coordinates in the north, south, east, and west directions, as well as the depth are calculated. At step 435, the well path is constructed by calculating the measured depth at step 436, calculating curvature at step 437, and calculating torsion at step 438. At step 439, minimum energy is calculated as the criteria for optimization.

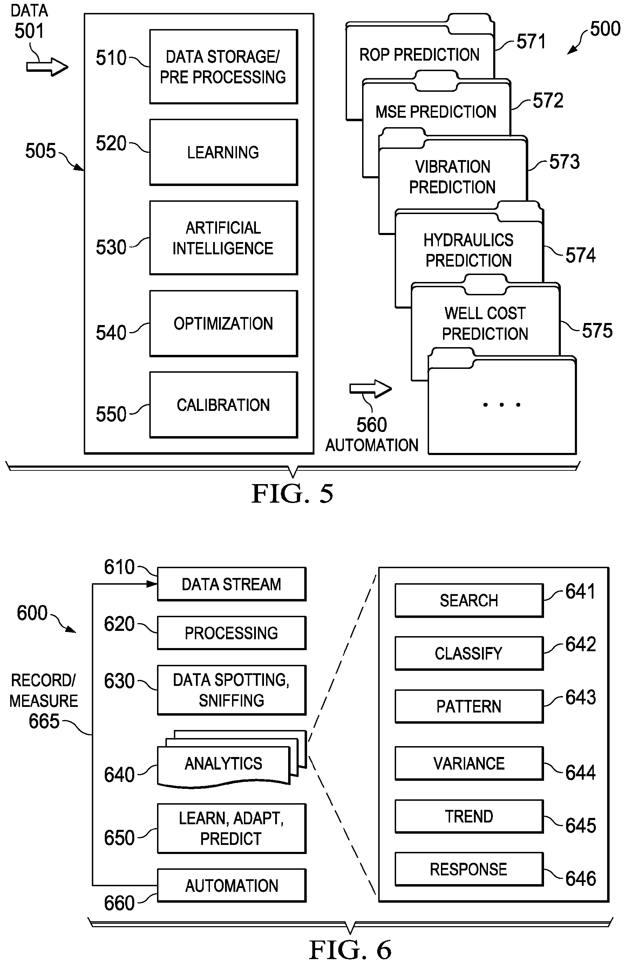

FIG. 5 illustrates an example of calculation procedure 500 in the optimization procedure according to the present disclosure. The calculation procedure 500 intakes data input 501 into a data warehouse 505 that includes five execution modules, which include a data storage and pre-processing module 510, a learning module 520, an artificial intelligence module 530, an optimization module 540, and a calibration module 550. The calculation procedure 500 then output automation parameters 560 for various scenarios. The various scenarios may include ROP prediction 571, MSE prediction 572, vibration analysis 573, hydraulics 574, well cost prediction 575, and other scenarios.

The data warehouse 505 stores and categorizes real time data, facilitating the storage and access on demand for analysis. This effectively provides a linkage and delivery node for access and permits preprocessing of analysis. The data warehouse 505 enables to follow the data trail back from a best practice optimized operation to the raw data supporting the outcome. This is critical for creating a system which is not just a "black box" but does contain the evidence and reasoning using in making each conclusion. The data brought may not be limited to surface data, stored data or real time data. The data include all the drilling parameters such as weight on bit, rotational speed - surface, downhole, annular pressure, temperature, density, inclination, azimuth, etc. and calculated values such as density, equivalent density, dogleg severity, hole diameter, etc. The data warehouse 505 at the macro level offers wide range of financial benefits, increased throughput, reduced lead times and can provide the organization and departments with insights that are otherwise not captured. Also a scheduled loading and delivery system is required so that unnecessary queuing of data is minimized. Furthermore, an efficient system bringing about a minimal pick up and drop off frequency may lead to considerable efficiency increase.

The data storage and pre-processing module 510 may be similar to the pre-processing module 120 and the assembly and classification module 130 in FIG. 1. The data storage and pre-processing module 510 may filter the data into a predetermined sampling rate. The data storage and pre-processing module 510 may include one or many digital filters and/or one or many analog filters, such as a noise reduction filter, a band-pass filter, a high pass filter, a low pass filter, an average filter, a delay filter, a summation filter, a format conversion filter, and/or other types of filters. The filters may be based on fast Fourier transform to allow the spectrum to be manipulated before converting the modified spectrum back to a time-series signal, such as band-pass filters. The filters may be based on a state-space model such as the Kalman filter.

The data storage and pre-processing module 510 may also store and classify data. In the case of normal operation datasets the data are classified as drilling, tripping out, tripping in, wiping, drilling and rotating off bottom. Embodiments of the present disclosure may be applicable to other non-productive operations which can be further classified. Several analysis such as rate of penetration prediction, specific energy estimation, drilling efficiency using the compressive rock strength using the UCS/CCS value or LWD log data, well profile energy, stuck pipe prediction, vibration prediction, increase buildup of cuttings bed, deviation in the friction factor, etc. may be performed for the classification.

The learning module 520 may include pattern recognition algorithms that can perform correlation analysis and determine certain trends and/or patterns of the data. The artificial intelligence module 530 may include computational learning module for accumulation of data patterns as well as trends analysis. The optimization module 540 may further employ various optimization schemes such as genetic algorithms, memetic algorithm, differential evolution, dynamic relaxation, hill climbing, Nelder-Mead simplicial heuristic, particle swarm optimization, simulated annealing, Tabu search, and others.

The optimization module 540 may then generate data useful for the calibration module 550 in determining trimmed parameters in the system. The calibration module 550 may reset initial values based on the trimmed parameters. The calculation procedure may then send updated data as well as the trimmed parameters to the automation process 560.

FIG. 6 illustrates an example control loop 600 for a downhole operation according to the present disclosure. The control loop 600 starts when data stream 610 is received by the control unit. The data stream 610 may include data types such as depth (measured and vertical), flow rate, weight on bit, bit rotational speed,, bit size, drill collar length, rate of penetration, torque and drag on the string, chloride filtrate, plastic viscosity, yield point, mud weight and gel strength (10 sec and 10 minute). Other data types may also be included for optimization calculation, such as calcium filtrate, chloride filtrate, torque, circulating pressure, weight on bit, drag, bit size, bottom-hole assembly, rate of penetration and revolutions per minute.

The data stream 610 may then be processed at step 620. The processing step 620 may include pre-processing, data assembly and classification and post processing. The output from the processing step 620 may then be sent to step 630 that has computation algorithms for data spotting and sniffing, which couples with the analytics step 640. The analytics step 640 may include a searching step 641, a classification step 642, a pattern recognition step 643, a variance calculation step 644, a trend analysis step 645 and a response step 646.

The output of the analytics step 640 may then output to an artificial intelligence module 650 that learns about the output, adapt to the recognized trend and/or pattern, and predicts parameters in the coming iterations. The analytics step 640 may calculate one or more variables associated with the ongoing drilling operation based at least in part on the substantially continuous stream of data associated with an ongoing downhole operation. The one or more variables may include values such as density, equivalent density, dogleg severity, hole diameter, and others alike.

The prediction output as well as optimized control parameters from the artificial intelligence module 650 may then be sent to an automation module 660 that applies the control parameters to equipment and tools. As the new control parameters are in effect, the equipment and tools may record and measure data stream of the updated operation performance at step 665. The data stream recorded and measured at step 665 is then sent to step 610, forming a closed control loop. The control loop 600 may include adjusting an input (such as a calculated value, a user command value, etc.) to a downhole tool performing the ongoing downhole operation by using the optimized downhole parameter in the ongoing operation.

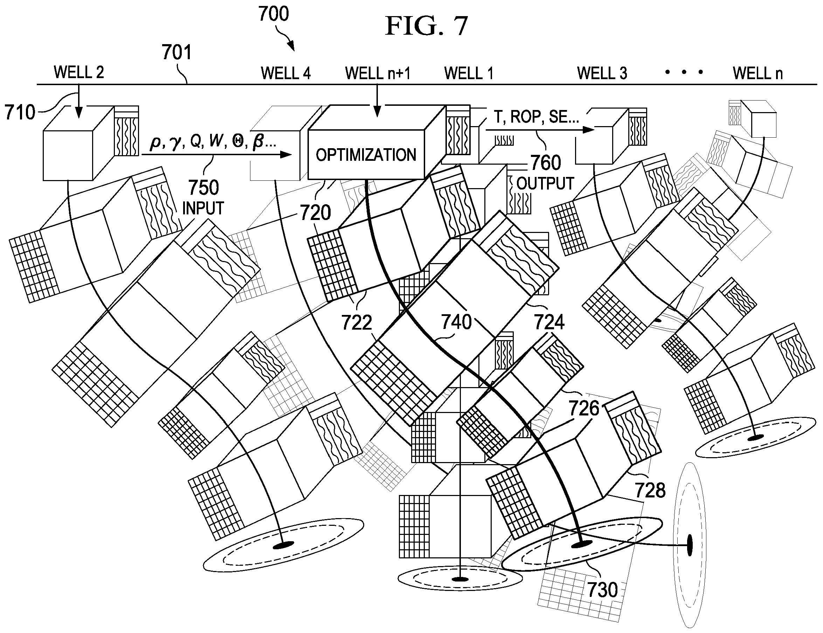

FIG. 7 illustrates an example single-well and/or multi-well graphical processes for real-time analysis and/or optimization of a downhole operation 700 according to the present disclosure. The downhole operation 700 may include one or more wells 710, such as illustrated in FIG. 7 from Well 1 to Well n+1, n = 0, 1, 2... The wells 710 may be located at various locations in the ground surface 701. Each well 710 may have a drilling target 730 and a drill path 740 to reach the target. In some implementations, the downhole operation 700 may include a drilling operation, a trip in operation, a trip out operation, a wiping operation, a drilling and rotating off bottom operation, and/or a production operation.

In some implementations, a number of wells 710 from Well 1 to Well n+1, n = 0, 1, 2... may each include an optimization system for calculating and implementing optimized downhole parameters for each well 710. Each well 710 may perform a respective downhole operation. In some implementations, different downhole operations performed by different wells 710 may occur simultaneously or temporally overlap. For each well 710, as the drilling operation proceeds along in the planned well path, a continuous optimization process may be present.

As illustrated in FIG. 7, the continuous optimization process may be represented by a string of boxes. Take the Well n+1 for example, the optimization procedure along the well path may be represented by a series boxes 720, 722, 724, 726 and 728, until reaching the drilling target 730. In each optimization box, for example, in the optimization box 720, a data stream 750 may be the input, which is similar to receiving the rig site input module 210 shown in FIG. 2. The optimization box 720 may then perform optimization and sensitivity analysis and output calculated values 760 such as torque, rate of penetration, etc. to the operation control system. The continuous optimization procedure enables the drilling operation to be more efficient and following the planned well path.

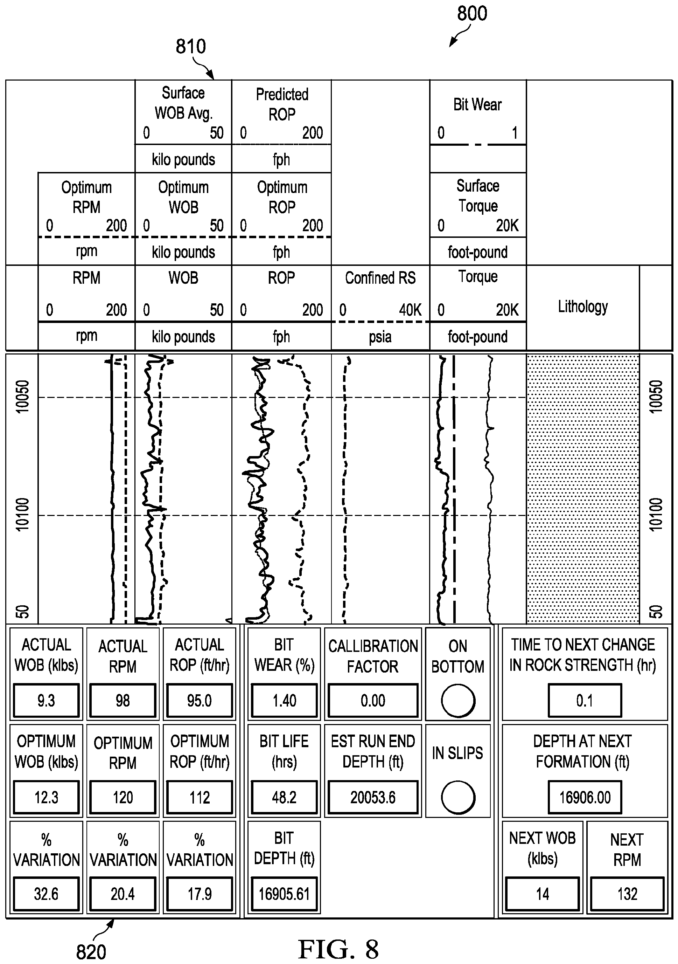

FIG. 8 is an example graphical user interface 800 of a system for real-time analysis and/or optimization of a downhole operation according to the present disclosure. The graphical user interface (GUI) 800 may include a control panel 810 and a report panel 820. The control panel 810 may allow a user to input control parameters, either based on external calculation, or the optimized value calculated within the optimization process. In the implementation shown in FIG. 8, the first two rows of data shows prediction and optimized values, while t-he third row allows users to input control parameters such as rotational speed, weight on bit, rate of penetration, etc. The corresponding measurement of the current data is then shown in the report panel 820 in the form of graphical plots.

The report panel 820 may include real time monitoring of the operation parameters such as the actual weight on bit, actual drilling speed, actual rate of penetration, etc. A comparison between the actual parameters and the optimized parameters is then produced and the variance based on the collected data is calculated and displayed. This allows operators to better monitor the drilling operation. Other parameters such as the bit wear, bit life, bit depth, calibration factor, estimated end depth, are also reported in the report panel 820.

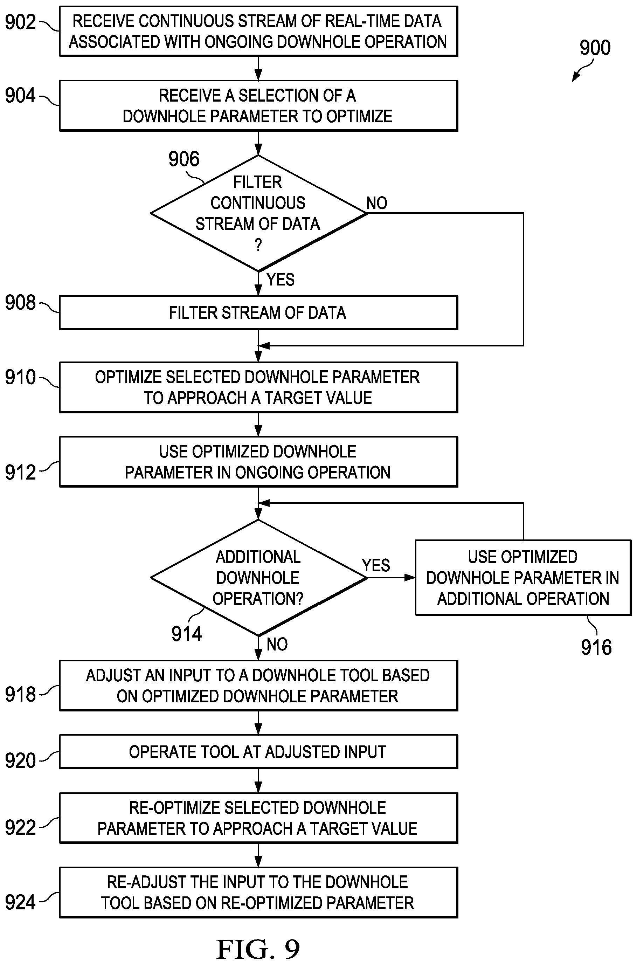

FIG. 9 illustrates an example method 900 for determining optimal parameters for a downhole operation. At step 902, a substantially continuous stream of real-time data associated with an ongoing downhole operation is received, *e.g.,* at a data warehouse. The stream of data may include technical data transmitted under an industrial format such as the wellsite information transfer standard markup language (WITSML); and the data stream may also include data under other standards and formats, such as the wellsite information transfer specification.

The stream of data may include data types such as depth (measured and vertical), flow rate, weight on bit, bit rotational speed, bit size, drill collar length, rate of penetration, torque and drag on the string, chloride filtrate, plastic viscosity, yield point, mud weight and gel strength (*e.g.,* 10 sec and 10 minute). Other data types may also be included for optimization calculation, such as calcium filtrate, chloride filtrate, torque, circulating pressure, weight on bit, drag, bit size, bottom-hole assembly, rate of penetration and revolutions per minute.

The stream of data may be real time, "right time", and/or buffered/stored data. In some implementations, the stream of data may include data from an active data warehousing, which captures transactions when data change in real time, and integrate the data into the warehouse along with maintaining batch or scheduled cycle refreshes. In some implementations, the stream of data may include data from a right-time data warehouse, which contains pre-determined data for certain pre-defined conditions. In some implementations, the stream of data may include data from a pre-stored memory or buffer module for validating, testing and/or tuning.

In some embodiments, the downhole operation may be a drilling operation, a trip in operation, a trip out operation, a wiping operation, a drilling and rotating off bottom operation, or a production (*e.g.,* primary or secondary) operation.

At step 904, a selection of a downhole parameter to optimize is received, *e.g.,* at a computing system, from a user. The downhole parameter to optimize may be received, for example, at the central computation device 160. In some embodiments, the downhole parameter may be, for example, information regarding weight on bit (WOB), drill bit rotational speed (N), drilling fluid flow rate (Q), and rate of penetration (ROP). Other variables may also be included depending on the complexity of the situation.

At step 906, a determination is made whether to filter the continuous stream of data received in (or near) real-time. If the data is to be filtered, it is filtered at step 908. For instance, the stream of data may be pre-processed with various filters. For example, the data stream may be filtered into a predetermined sampling rate. There may be one or many digital filters and/or one or many analog filters. Signal converters such as digital to analog signal converter or analog to digital signal converter may be included to unify the signal data to be processed. The filters may be a band-pass filter, a high pass filter, a low pass filter, an average filter, a noise reduction filter, a delay filter, a summation filter, a format conversion filter, and/or other types of filters. The filters may be based on fast Fourier transform to allow the spectrum to be manipulated before converting the modified spectrum back to a time-series signal, such as band-pass filters. The filters may be based on a state-space model such as the Kalman filter.

After filtering, or if no filtering occurs, the selected downhole parameter is optimized to approach a target value at step 910. In some embodiments, optimizing the downhole parameter may include maximizing the selected downhole parameter based on the portion of the received stream of data to approach the target value of the selected downhole parameter. Alternatively, or in addition, optimizing may include minimizing the selected downhole parameter based on the portion of the received stream of data to approach the target value of the selected downhole parameter. Alternatively, or in addition, optimizing may include predicting the selected downhole parameter during the ongoing downhole operation.

As one example embodiment, optimization may be performed based on calculation of the hydromechanical specific energy. The specific energy may be compared to that of rock strength. Either UCS or CCS enables continuous evaluation of drilling performance to identify limiters, such as flounder points, in the drilling system. The specific energy calculated can be used to determine the failure point of the rock formation calculated from the function of rock strength. The rock strength can be predicted from offset well analysis and projected onto future well profiles.

The hydromechanical specific energy maybe calculated using various formulations depending on the complexity of the downhole situation. For example, the mathematical formulation for complex well path designs may utilize data to enable decision making on controlling vibrations along with drill string and predicting when to pull out worn bits, preventing bottom hole balling and bit balling. The objective function may be a modified derivation of mechanical specific energy calculated as:

$$E_s = \frac{W_{eff}}{A_b} + \frac{120\pi NT}{R \times A_b} + \frac{Q\Delta P_b}{R \times A_b},$$

and

$$W_{eff} = W - \frac{Q}{58}\sqrt{\rho_m \Delta P_b}$$

where, $E_s$ is the specific energy, W is the weight on bit (kips), $W_{eff}$ is the effective weight on bit (kpis), Q is the flow rate (gpm), $\Delta P_b$ is the pressure drop (psi), R is the bore radius (in), $A_b$ is the bore cross section area (in$^2$), N is the speed of bit rotation (rpm), T is torque (ft-lbf), and $\rho_m$ is drilling fluid density.

At step 912, the optimized downhole parameter may be used in the ongoing downhole operation. For example, in some embodiments, using the optimized downhole parameter may include using it to control a tool, such as a downhole tool used in the ongoing downhole operation.

At step 914, a determination is made whether there is an additional ongoing downhole operation in which the optimized downhole parameter may be used. For example, in some embodiments, the ongoing downhole operation may occur in a first wellbore and additional similar or identical downhole operations may occur in other wellbores (*e.g.,* within a field of multiple wellbores and operations). If the determination is made that there is an additional ongoing downhole operation in which the optimized downhole parameter may be used, then the optimized downhole parameter is used in the additional operations in the additional wellbores at step 916. This sequence can be repeated as illustrated in method 900.

If the determination is made that there is not an additional ongoing downhole operation in which the optimized downhole parameter may be used, then an input to a downhole tool is adjusted based on the optimized downhole parameter at step 918. Next, at step 920, the downhole tool is operated at the adjusted input. As illustrated in steps 922-924, the selected downhole parameter may be optimized again or multiple times, according to the continuous stream of data received at step 902.

A number of implementations have been described. Nevertheless, it will be understood that various modifications may be made. Further, method 900, as well as other methods and processes described above, may include fewer steps than those illustrated or more steps than those illustrated. In addition, the illustrated steps of method 900, as well as other methods and processes described above, may be performed in the respective orders illustrated or in different orders than that illustrated. Other variations in the order of steps are also possible. Accordingly, other implementations are within the scope of the following claims.

**Claims**

1. A computer-implemented method for managing a downhole operation (700), comprising:

    receiving (902), at a data warehouse (505), a substantially continuous stream of real-time data (110) associated with an ongoing downhole operation;
    receiving (904), from a user, a selection of a downhole parameter;
    optimizing (910), with a computing system (160), the selected downhole parameter based on a portion of the received stream of data to approach a target value (730) of the selected downhole parameter; and
    using (912) the optimized downhole parameter in the ongoing operation
    wherein the method further comprises, prior to optimizing the selected downhole parameter, filtering (908) the received stream of data associated with the ongoing downhole operation to a predetermined sampling rate.

2. The method according to claim 1, wherein filtering (908) the received stream of data (110) further comprises removing noise associated with the received stream of data.

3. The method according to any of the preceding claims, wherein optimizing (910) the selected downhole parameter comprises one of:

    maximizing the selected downhole parameter based on the portion of the received stream of data (110) to approach the target value (730) of the selected downhole parameter; or
    minimizing the selected downhole parameter based on the portion of the received stream of data to approach the target value of the selected downhole parameter.

4. The method according to any of the preceding claims, wherein the ongoing downhole operation (700) is a first downhole operation, the method further comprising using (916) the optimized downhole parameter in a second downhole operation different than the first downhole operation.

5. The method according to claim 4, wherein the first downhole operation (700) occurs in a first wellbore, and the second downhole operation occurs in a second wellbore different than the first wellbore.

6. The method according to claim 4, wherein the first and second downhole operations temporally overlap.

7. The method according to any of the preceding claims, wherein optimizing (910) the selected downhole parameter comprises predicting the selected downhole parameter during the ongoing downhole operation (700).

8. The method according to any of the preceding claims, wherein using (912) the optimized downhole parameter in the ongoing operation (700) comprises adjusting (918) an input to a downhole tool performing the ongoing downhole operation.

9. The method according to claim 8, further comprising:

    operating (920) the downhole tool at the adjusted input;
    optimizing the selected downhole parameter based on another portion of the received stream of data to approach the target value (730) of the selected downhole parameter; and
    re-adjusting (924) the input to the downhole tool performing the ongoing downhole operation.

10. The method of claim 1, further comprising preprocessing the continuous stream of real-time data (110) in the data warehouse (505) for computation time reduction and preparation for following computation processes.

11. The method according to any of the preceding claims, wherein the ongoing downhole operation (700) comprises at least one of: a drilling operation; a trip in operation; a trip out operation; a wiping operation; a drilling and rotating off bottom operation; or a production operation.

12. The method according to any of the preceding claims, wherein the substantially continuous stream of data (110) associated with an ongoing downhole operation (700) comprises at least one of: weight on bit; downhole motor rotational speed; surface rotational speed; annular pressure; temperature; density; inclination; or azimuth.

13. The method according to any of the preceding claims, further comprising calculating one or more variables associated with the ongoing downhole operation (700) based at least in part on the substantially continuous stream of data (110) associated with an ongoing downhole operation.

14. The method according to claim 13, wherein the one or more variables associated with the ongoing downhole operation (700) comprise at least one of: hydromechanical specific energy; density, equivalent density, dogleg severity, or hole diameter.

15. The method according to claim 14, wherein calculating the hydromechanical specific energy comprises:

$$E_s = \frac{W_{eff}}{A_b} + \frac{120\pi NT}{R \times A_b} + \frac{Q\Delta P_b}{R \times A_b},$$

and

$$W_{eff} = W - \frac{Q}{58}\sqrt{\rho_m \Delta P_b}$$

where, $E_s$ is the specific energy, W is the weight on bit, $W_{eff}$ is the effective weight on bit, Q is the flow rate, $\Delta P_b$ is the pressure drop, R is the bore radius, $A_b$ is the bore cross section area, N is the speed of bit rotation, T is torque, and $\rho_m$ is drilling fluid density.

16. An apparatus comprising instructions embodied on a tangible, non-transitory computer-readable media, the instructions operable when executed to cause a computing system (160) to carry out the computer-implemented method of any preceding claim.

**Patentansprüche**

1. Computerimplementiertes Verfahren zum Managen eines Bohrlochvorgangs (700), umfassend:

Empfangen (902) eines im Wesentlichen kontinuierlichen Stroms von Echtzeitdaten (110), die mit einem laufenden Bohrlochvorgang verbunden sind, an einem Data-Warehouse (505);
Empfangen (904) einer Auswahl eines Bohrlochparameters von einem Benutzer;
Optimieren (910) des ausgewählten Bohrlochparameters auf Grundlage eines Teils des empfangenen Datenstroms mit einem Rechensystem (160), um einem Zielwert (730) des ausgewählten Bohrlochparameters näher zu kommen; und
Verwenden (912) des optimierten Bohrlochparameters im laufenden Vorgang, wobei das Verfahren ferner vor dem Optimieren des ausgewählten Bohrlochparameters Filtern (908) des empfangenen Datenstroms, der mit dem laufenden Bohrlochvorgang verbunden ist, auf eine vorbestimmte Abtastrate umfasst.

2. Verfahren nach Anspruch 1, wobei Filtern (908) des empfangenen Datenstroms (110) ferner Entfernen von Rauschen umfasst, das mit dem empfangenen Datenstrom verbunden ist.

3. Verfahren nach einem der vorhergehenden Ansprüche, wobei Optimieren (910) des ausgewählten Bohrlochparameters eins der Folgenden umfasst:

Maximieren des ausgewählten Bohrlochparameters auf Grundlage eines Teils des empfangenen Datenstroms (110), um dem Zielwert (730) des ausgewählten Bohrlochparameters näher zu kommen; oder
Minimieren des ausgewählten Bohrlochparameters auf Grundlage eines Teils des empfangenen Datenstroms, um dem Zielwert des ausgewählten Bohrlochparameters näher zu kommen.

4. Verfahren nach einem der vorhergehenden Ansprüche, wobei der laufende Bohrlochvorgang (700) ein erster Bohrlochvorgang ist, wobei das Verfahren ferner Verwenden (916) des optimierten Bohrlochparameters bei einem zweiten Bohrlochvorgang umfasst, der sich von dem ersten Bohrlochvorgang unterscheidet.

5. Verfahren nach Anspruch 4, wobei der erste Bohrlochvorgang (700) in einem ersten Bohrloch stattfindet und der zweite Bohrlochvorgang in einem zweiten Bohrloch stattfindet, das sich von dem ersten Bohrloch unterscheidet.

6. Verfahren nach Anspruch 4, wobei sich der erste und der zweite Bohrlochvorgang zeitlich überschneiden.

7. Verfahren nach einem der vorhergehenden Ansprüche, wobei Optimieren (910) des ausgewählten Bohrlochparameters Vorhersagen des ausgewählten Bohrlochparameters während des laufenden Bohrlochvorgangs (700) umfasst.

8. Verfahren nach einem der vorhergehenden Ansprüche, wobei Verwenden (912) des optimierten Bohrlochparameters bei dem laufenden Vorgang (700) Einstellen (918) einer Eingabe an einem Bohrlochwerkzeug umfasst, das den laufenden Bohrlochvorgang durchführt.

9. Verfahren nach Anspruch 8, ferner umfassend:

   Betreiben (920) des Bohrlochwerkzeugs mit der eingestellten Eingabe;
   Optimieren des ausgewählten Bohrlochparameters auf Grundlage eines anderen Teils des empfangenen Datenstroms, um dem Zielwert (730) des ausgewählten Bohrlochparameters näher zu kommen; und
   erneutes Einstellen (924) der Eingabe am Bohrlochwerkzeug, das den laufenden Bohrlochvorgang durchführt.

10. Verfahren nach Anspruch 1, ferner umfassend Vorverarbeiten des kontinuierlichen Stroms von Echtzeitdaten (110) im Data-Warehouse (505) zur Rechenzeitreduktion und Vorbereitung für nachfolgende Rechenprozesse.

11. Verfahren nach einem der vorhergehenden Ansprüche, wobei der laufende Bohrlochvorgang (700) mindestens eins der Folgenden umfasst: einen Bohrvorgang; einen Einfahrvorgang; einen Ausfahrvorgang; einen Wischvorgang; einen Vorgang des Bohrens und Drehens vom Boden; oder einen Produktionsvorgang.

12. Verfahren nach einem der vorhergehenden Ansprüche, wobei der im Wesentlichen kontinuierliche Datenstrom (110), der mit einem laufenden Bohrlochvorgang (700) verbunden ist, mindestens eins der Folgenden umfasst: Meißelbelastung; Bohrlochmotordrehzahl; Oberflächendrehzahl; Ringdruck; Temperatur; Dichte; Neigung; oder Azimut.

13. Verfahren nach einem der vorhergehenden Ansprüche, ferner umfassend Berechnen einer oder mehrerer Variablen, die mit dem laufenden Bohrlochvorgang (700) verbunden sind, zumindest teilweise auf Grundlage des im Wesentlichen kontinuierlichen Datenstroms (110), der mit einem laufenden Bohrlochvorgang verbunden ist.

14. Verfahren nach Anspruch 13, wobei die eine oder die mehreren Variable(n), die mit dem laufenden Bohrlochvorgang (700) verbunden ist/sind, mindestens eins von Folgenden umfasst/umfassen: hydromechanische spezifische Energie; Dichte, äquivalente Dichte, Bohrlochabweichung oder Lochdurchmesser.

15. Verfahren nach Anspruch 14, wobei Berechnen der hydromechanischen spezifischen Energie Folgendes umfasst:

$$E_s = \frac{W_{eff}}{A_b} + \frac{120\pi NT}{R \times A_b} + \frac{Q\Delta P_b}{R \times A_b},$$

und

$$W_{eff} = W - \frac{Q}{58}\sqrt{\rho_m \Delta P_b}$$

wobei $E_s$ die spezifische Energie ist, W die Meißelbelastung ist, $W_{eff}$ die effektive Meißelbelastung ist, Q die Strö-

mungsrate ist, $\Delta P_b$ der Druckabfall ist, R der Bohrungsradius ist, $A_b$ die Bohrungsquerschnittsfläche ist, N die Drehzahl der Meißeldrehung ist, T Drehmoment ist und $\rho_m$ die Bohrflüssigkeitsdichte ist.

16. Vorrichtung, umfassend Anweisungen, die auf einem greifbaren, nicht-transitorischen, computerlesbaren Medium ausgeführt sind, wobei die Anweisungen bei Ausführung betriebsfähig sind, ein Rechensystem (160) zu veranlassen, das computerimplementierte Verfahren nach einem der vorhergehenden Ansprüche auszuführen.

**Revendications**

1. Procédé mis en oeuvre par ordinateur pour la gestion d'une opération de fond de puits (700), comprenant :

   la réception (902), au niveau d'un entrepôt de données (505), d'un flux sensiblement continu de données en temps réel (110) associées à une opération de fond de puits en cours ;
   la réception (904), par un utilisateur, d'une sélection d'un paramètre de fond de puits ;
   l'optimisation (910), avec un système informatique (160), du paramètre de fond de puits sélectionné sur la base d'une portion du flux de données reçu pour approcher une valeur cible (730) du paramètre de fond de puits sélectionné ; et
   l'utilisation (912) du paramètre de fond de puits optimisé dans l'opération en cours
   dans lequel le procédé comprend en outre, avant l'optimisation du paramètre de fond de puits sélectionné, le filtrage (908) du flux de données reçu associées à l'opération de fond de puits en cours à un taux d'échantillonnage prédéterminé.

2. Procédé selon la revendication 1, dans lequel le filtrage (908) du flux de données reçu (110) comprend en outre l'élimination du bruit associé au flux de données reçu.

3. Procédé selon l'une quelconque des revendications précédentes, dans lequel l'optimisation (910) du paramètre de fond de puits sélectionné comprend un parmi :

   la maximisation du paramètre de fond de puits sélectionné sur la base de la portion du flux de données reçu (110) pour approcher la valeur cible (730) du paramètre de fond de puits sélectionné ; ou
   la minimisation du paramètre de fond de puits sélectionné sur la base de la portion du flux de données reçu pour approcher la valeur cible du paramètre de fond de puits sélectionné.

4. Procédé selon l'une quelconque des revendications précédentes, dans lequel l'opération de fond de puits en cours (700) est une première opération de fond de puits, le procédé comprenant en outre l'utilisation (916) du paramètre de fond de puits optimisé dans une deuxième opération de fond de puits différente de la première opération de fond de puits.

5. Procédé selon la revendication 4, dans lequel la première opération de fond de puits (700) a lieu dans un premier puits de forage, et la deuxième opération de fond de puits a lieu dans un deuxième puits de forage différent du premier puits de forage.

6. Procédé selon la revendication 4, dans lequel les première et deuxième opérations de fond de puits se chevauchent temporairement.

7. Procédé selon l'une quelconque des revendications précédentes, dans lequel l'optimisation (910) du paramètre de fond de puits sélectionné comprend la prédiction du paramètre de fond de puits sélectionné pendant l'opération de fond de puits en cours (700) .

8. Procédé selon l'une quelconque des revendications précédentes, dans lequel l'utilisation (912) du paramètre de fond de puits optimisé dans l'opération en cours (700) comprend l'ajustage (918) d'une entrée à un outil de fond de puits réalisant l'opération de fond de puits en cours.

9. Procédé selon la revendication 8, comprenant en outre :

   le fonctionnement (920) de l'outil de fond de puits à l'entrée ajustée ;
   l'optimisation du paramètre de fond de puits sélectionné sur la base d'une autre portion du flux de données reçu pour approcher la valeur cible (730) du paramètre de fond de puits sélectionné ; et

le réajustage (924) de l'entrée à l'outil de fond de puits réalisant l'opération de fond de puits en cours.

10. Procédé selon la revendication 1, comprenant en outre le prétraitement du flux continu de données en temps réel (110) dans l'entrepôt de données (505) pour une réduction du temps de calcul et une préparation pour les processus de calculs subséquents.

11. Procédé selon l'une quelconque des revendications précédentes, dans lequel l'opération de fond de puits en cours (700) comprend au moins une parmi : une opération de forage ; une opération de descente ; une opération de remontée ; une opération d'essuyage ; une opération avec outil suspendu de forage et de rotation ; ou une opération de production.

12. Procédé selon l'une quelconque des revendications précédentes, dans lequel le flux sensiblement continu de données (110) associées à une opération de fond de puits en cours (700) comprend au moins un parmi : la charge sur le trépan ; la vitesse de rotation du moteur de fond de puits ; la vitesse de rotation de surface ; la pression annulaire ; la température ; la densité ; l'inclinaison ; ou l'azimut.

13. Procédé selon l'une quelconque des revendications précédentes, comprenant en outre le calcul d'une ou plusieurs variables associées à l'opération de fond de puits en cours (700) basé au moins en partie sur le flux sensiblement continu de données (110) associées à l'opération de fond de puits en cours.

14. Procédé selon la revendication 13, dans lequel l'une ou les plusieurs variables associées à l'opération de fond de puits en cours (700) comprennent au moins un parmi : l'énergie spécifique hydromécanique ; la densité, la densité équivalente, la gravité de déviation en patte de chien, ou le diamètre du trou.

15. Procédé selon la revendication 14, dans lequel le calcul de l'énergie spécifique hydromécanique comprend :

$$E_s = \frac{W_{eff}}{A_b} + \frac{120\pi NT}{R \times A_b} + \frac{Q\Delta P_b}{R \times A_b},$$

et

$$W_{eff} = W - \frac{Q}{58}\sqrt{\rho_m \Delta P_b}$$

dans lequel, $E_s$ est l'énergie spécifique, W est la charge sur le trépan, $W_{eff}$ est la charge effective sur le trépan, Q est le débit, $\Delta P_b$ est la chute de pression, R est le rayon de forage, $A_b$ est la zone de section transversale du forage, N est la vitesse de la rotation du trépan, T est le couple, et $\rho_m$ est la densité du fluide de forage

16. Appareil comprenant des instructions incorporées sur un support lisible par ordinateur tangible non transitoire, les instructions pouvant être utilisées lorsqu'elles sont exécutées pour amener un système informatique (160) à réaliser le procédé mis en oeuvre par ordinateur selon une quelconque revendication précédente.

FIG. 1

## FIG. 2

SPECIFIC ENERGY PREDICTION

200

201

270 — SPECIFIC ENERGY PREDICTION

280

ENGINE 2
260
COMPARE → REPORT

TRAJECTORY UPDATE

LOG UPDATE

250 — ENGINE 1 ← UPDATE — SAM SERVER ← LOAD — WELLPLAN PLUGIN 235

240

NOTIFY

211 RIG SITE 213

LOG DATA | WITSML SERVER

OPENWIRE (CLIENT) 220 — LOAD → EDM 230

203

210

300

ROP PREDICTION

310 — **DATA VARIABLES**

WOB | N | Q | ROP

320 — **TREND ANALYSIS DESIGN VARIABLES**

$D_b$ | $A_n$ | $\rho_m$ | $D_r$ | $A_r$

330 — **CALCULATED PARAMETERS**

$W_{eff}$ | $\Delta P_b$ | $T_s$ | $T_f$ | $F_s$

340 — ROP PREDICTION

FIG. 3

400

FIG. 4A

DRILLING - TDA

410 — DRAG CHART

420 — WELL TRAJECTORY PLAN

430 — CALCULATION USING CURVATURE BRIDGING

441 — HOOK LOAD — OK

443 — DRAG — OK

445 — TORQUE — OK

450 — REPORT

430

WELLPATH CALCULATION

431 — CALCULATION USING
CURVATURE BRIDGING

432 — DEFINE GENERAL EXPRESSION
FOR CLOTHOID

433 — SPECIFY THE BOUNDARY
CONDITIONS OF WELLPATH

434 — CALCULATE THE NORTH, EAST
AND DEPTH COORDINATES

435 — CONSTRUCT WELLPATH

CALCULATE
MEASURED
DEPTH

436

CALCULATE
CURVATURE

437

CALCULATE
TORSION

438

CALCULATE
MINIMUM
ENERGY

439

FIG. 4B

DATA
501

510 — DATA STORAGE/ PRE PROCESSING

520 — LEARNING

530 — ARTIFICIAL INTELLIGENCE

540 — OPTIMIZATION

550 — CALIBRATION

505

ROP PREDICTION — 571

MSE PREDICTION — 572

VIBRATION PREDICTION — 573

HYDRAULICS PREDICTION — 574

WELL COST PREDICTION — 575

. . .

560 AUTOMATION

500

## FIG. 5

610 — DATA STREAM

620 — PROCESSING

630 — DATA SPOTTING, SNIFFING

640 — ANALYTICS

650 — LEARN, ADAPT, PREDICT

660 — AUTOMATION

600

RECORD/ MEASURE 665

SEARCH — 641

CLASSIFY — 642

PATTERN — 643

VARIANCE — 644

TREND — 645

RESPONSE — 646

## FIG. 6

22

**FIG. 7**

800

810

| | Surface WOB Avg. 0     50 | Predicted ROP 0     200 | | Bit Wear 0    1 | |
|---|---|---|---|---|---|
| | kilo pounds | fph | | | |
| Optimum RPM 0   200 | Optimum WOB 0    50 | Optimum ROP 0    200 | | Surface Torque 0    20K | |
| rpm | kilo pounds | fph | | foot-pound | |
| RPM 0   200 | WOB 0    50 | ROP 0    200 | Confined RS 0    40K | Torque 0    20K | Lithology |
| rpm | kilo pounds | fph | psia | foot-pound | |

| ACTUAL WOB (klbs) | ACTUAL RPM | ACTUAL ROP (ft/hr) | BIT WEAR (%) | CALLIBRATION FACTOR | ON BOTTOM | TIME TO NEXT CHANGE IN ROCK STRENGTH (hr) | |
|---|---|---|---|---|---|---|---|
| 9.3 | 98 | 95.0 | 1.40 | 0.00 | ◯ | 0.1 | |
| OPTIMUM WOB (klbs) | OPTIMUM RPM | OPTIMUM ROP (ft/hr) | BIT LIFE (hrs) | EST RUN END DEPTH (ft) | IN SLIPS | DEPTH AT NEXT FORMATION (ft) | |
| 12.3 | 120 | 112 | 48.2 | 20053.6 | ◯ | 16906.00 | |
| % VARIATION | % VARIATION | % VARIATION | BIT DEPTH (ft) | | | NEXT WOB (klbs) | NEXT RPM |
| 32.6 | 20.4 | 17.9 | 16905.61 | | | 14 | 132 |

820

FIG. 8

902 — RECEIVE CONTINUOUS STREAM OF REAL-TIME DATA ASSOCIATED WITH ONGOING DOWNHOLE OPERATION

900

904 — RECEIVE A SELECTION OF A DOWNHOLE PARAMETER TO OPTIMIZE

906 — FILTER CONTINUOUS STREAM OF DATA ? — NO

YES

908 — FILTER STREAM OF DATA

910 — OPTIMIZE SELECTED DOWNHOLE PARAMETER TO APPROACH A TARGET VALUE

912 — USE OPTIMIZED DOWNHOLE PARAMETER IN ONGOING OPERATION

ADDITIONAL DOWNHOLE OPERATION? — YES — USE OPTIMIZED DOWNHOLE PARAMETER IN ADDITIONAL OPERATION

914 — NO

916

918 — ADJUST AN INPUT TO A DOWNHOLE TOOL BASED ON OPTIMIZED DOWNHOLE PARAMETER

920 — OPERATE TOOL AT ADJUSTED INPUT

922 — RE-OPTIMIZE SELECTED DOWNHOLE PARAMETER TO APPROACH A TARGET VALUE

924 — RE-ADJUST THE INPUT TO THE DOWNHOLE TOOL BASED ON RE-OPTIMIZED PARAMETER

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009119082 A1
- US 2010051286 A1